# EUROPEAN PATENT SPECIFICATION

(11) **EP 2 509 321 B1**
(45) Date of publication and mention of the grant of the patent: **10.05.2017**
(21) Application number: 12161043.0
(22) Date of filing: 23.03.2012
(51) Int. Cl.: H04N 9/31, H04N 5/74, G03B 21/14, G06T 3/40

(54) **Projection apparatus, control method thereof, and program**
Projektionsvorrichtung, Steuerverfahren dafür und Programm
Appareil de projection, son procédé de contrôle et programme

(30) Priority: 06.04.2011 JP 2011084720
(43) Date of publication of application: 10.10.2012
(73) Proprietor: Canon Kabushiki Kaisha, Tokyo 146-8501 (JP)
(72) Inventor: Murayama, Kohei, Ohta-ku, Tokyo (JP)
(74) Representative: Garner, Jonathan Charles Stapleton

(56) References cited:
- EP-A1- 1 115 105
- EP-A2- 1 515 551
- JP-A- 10 111 533
- US-A1- 2010 253 862

## Description

### BACKGROUND OF THE INVENTION

### Field of the Invention

The present invention relates to a technology in which a user interface screen can be superimposed on an image and projected.

### Description of the Related Art

In a projection apparatus that projects an image onto a screen, for example, when the projection apparatus is at an incline with respect to the screen, the image projected on the screen is distorted in a trapezoidal shape with respect to its original rectangular shape. In such a case, by forming an image that has been distorted so as to compensate for the trapezoidal distortion, and projecting that distorted image, the image can be projected in a desired rectangular shape.

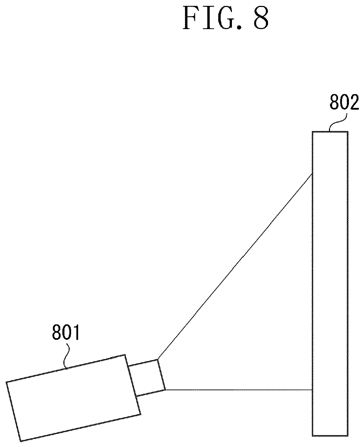

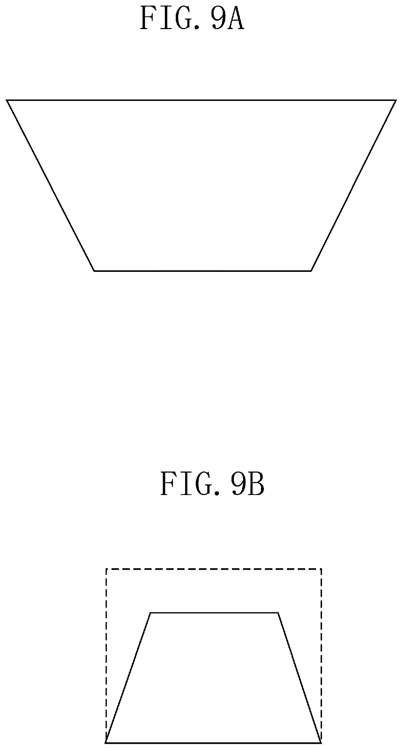

For example, as illustrated in Fig. 8, when a projection apparatus 801 projects an image onto a screen that is in an obliquely upward direction, the projected image is stretched in the upwards direction, so that a trapezoidal image that has a longer upper base than lower base is displayed on a screen 400, as illustrated in Fig. 9A.

When correcting this trapezoidal distortion, the image to be displayed can be projected in its original rectangular shape by reducing the upper side pixels to form a trapezoidal image region like that illustrated in Fig. 9B. Further, in Fig. 9B, the region indicated by a dashed line is an original image region, and a region indicated by a solid line is a trapezoidal shape image region that has been reduced based on trapezoidal distortion correction.

The projection apparatus includes a user interface for a user to set an arrangement condition, color and the like. To improve user's operability, an on-screen display (OSD) for adjustment of settings is superimposed on the projected image as an on-screen image. Even for the projection of the OSD menu, since trapezoidal distortion occurs when performing tilt projection, reduction processing is also performed to correct the shape.

Generally, to convey a larger amount of information, the contents displayed by an OSD menu are displayed using a narrow font and graphics shape. Therefore, in many cases a precise display is required. However, there is a problem that when such reduction processing is performed on the OSD menu based on trapezoidal distortion correction, pixel thinning and the like occur, so that the displayed OSD menu itself cannot be viewed.

Japanese Patent Application Laid-Open No. 2003-153135 discusses a technology which reduces the effect of trapezoidal distortion correction on an OSD menu by projecting the OSD menu on a position having a small trapezoidal distortion correction amount and a small reduction processing effect. For example, as illustrated in Fig. 8, when an image is projected onto a screen that is in an obliquely upward direction, since the trapezoidal distortion correction amount is smaller at a position closer to the bottom base of the image, the OSD menu is displayed at a position that is close to the bottom base in the image.

However, the trapezoidal distortion correction amount greatly changes depending on a projection environment of the user. For example, when projecting a very short distance from the projection apparatus to the screen, the projection apparatus needs to be arranged at a position that does not cast a shadow over the user's line of vision. In this case, it is necessary to arrange the projection apparatus at a short distance above or below the screen, so that inevitably a tilt angle increases. Consequently, the trapezoidal distortion correction increases.

Further, trapezoidal distortion does not only occur in the up/down directions, but it can also occur in the left/right directions, which reduces the number of positions having a small trapezoidal distortion correction amount in the screen. In this case, a reduction in the information amount due to trapezoidal distortion correction is unavoidable even when trying to project the OSD menu on a position having a small trapezoidal distortion correction amount in the screen, so that the visibility problem cannot be resolved.
US 2010/0253862A1 provides a projection display device configured to solve a caption dropout problem. A CPU determines a correction amount required to correct an image signal for distortion. A scaler corrects the image signal for distortion based on the correction amount. A caption signal processing circuit adjusts the display content of a caption signal based on the correction amount in such a manner that the entire caption indicated by the caption signal is displayed. A display image generation circuit synthesizes the caption signal with the display content thereof adjusted by the caption signal processing circuit, with the image signal corrected by the scaler. A projection section projects the synthesized image signal.

EP 1 115 105 A1 describes a projection type display apparatus including an on screen display (OSD) menu generating section. It describes various embodiments in which the source image and the OSD are corrected, either together after image synthesizing or separately, before image synthesizing.

### SUMMARY OF THE INVENTION

According to a first aspect of the present invention, there is provided a projection apparatus as specified in claims 1 to 7. According to a second aspect of the present invention, there is provided a method for controlling a projection apparatus as specified in claim 8. According to a third aspect of the present invention, there is provided a program as specified in claims 9 and 10. According to a fourth aspect of the present invention, there is provided a storage medium as specified in claim 11.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates a configuration of a projection apparatus according to a first exemplary embodiment of the present invention.
Fig. 2 illustrates an example when upward tilt projection is performed in a vertical direction.
Figs. 3A, 3B, and 3C illustrate a relationship between a tilt angle and a displayed OSD menu, respectively.
Figs. 4A, 4B, and 4C illustrate examples of an OSD menu, respectively.
Figs. 5A, 5B, and 5C illustrate OSD menus generated for a reduction rate of 0%, 20% and 40%.
Fig. 6 illustrates a configuration of a projection apparatus according to a fourth exemplary embodiment of the present invention.
Figs. 7A, 7B, and 7C illustrate examples of trapezoidal distortion correction of an OSD menu including a slider bar, respectively.
Fig. 8 illustrates tilt projection.
Figs. 9A and 9B illustrate distortion of a projection screen during tilt projection.

### DESCRIPTION OF THE EMBODIMENTS

Various exemplary embodiments, features, and aspects of the invention will be described in detail below with reference to the drawings.

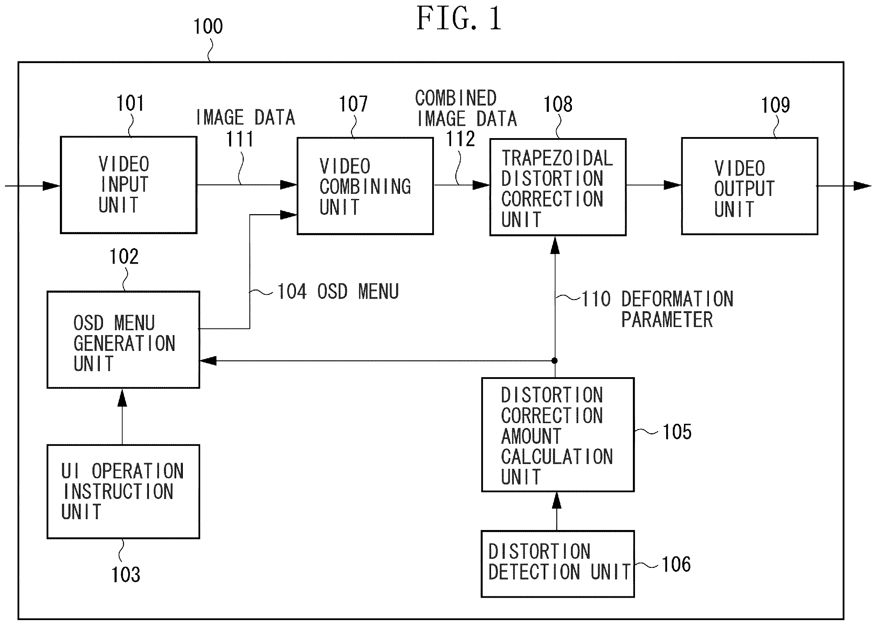

First, a first exemplary embodiment will be described. Fig. 1 illustrates a configuration of a projection apparatus 100 according to a first exemplary embodiment of the present invention.

The projection apparatus 100 performs arbitrary image processing (not illustrated) on image data from a personal computer (PC) or a video output device that was input from a video input unit 101, and projects the processed image data via a video output unit 109.

A distortion detection unit 106 detects an amount of distortion in an image when the image is projected from a tilt angle of the projection apparatus 100. The distortion detection unit 106 can perform this detection based on an automatic method that captures a display pattern on a projection surface, uses an area sensor, or uses an incline sensor for a vertical direction, for example. Alternatively, this detection can also be performed based on a manual operation by a user's instruction.

The distortion amount detected by the distortion detection unit 106 is input into a distortion correction amount calculation unit 105. Based on the distortion amount, the distortion correction amount calculation unit 105 calculates a deformation parameter 110 for obtaining a desired rectangular shape for the input image data.

Although the deformation parameter 110 may be arbitrary due to a mounting method, in the present exemplary embodiment, the deformation parameter 110 is mounted as a reduction rate for each pixel coordinate. The deformation parameter 110 calculated by the distortion correction amount calculation unit 105 is input into an OSD menu generation unit 102 and a trapezoidal distortion correction unit 108, respectively.

The OSD menu generation unit 102 generates an OSD menu (a user interface screen) that is superimposed over the image data input from the video input unit 101. The trigger for displaying the OSD menu can be arbitrarily configured based on a system.

In the present exemplary embodiment, a user interface (UI) operation instruction unit 103 detects an operation event from the user, and, based on that operation event, outputs an instruction about contents and a display region of the OSD menu to the OSD menu generation unit 102. The OSD menu generation unit 102 determines the contents and the display region of the OSD menu based on the instruction from the UI operation instruction unit 103.

Further, the deformation parameter 110 calculated as a reduction rate for each coordinate in the screen by the distortion correction amount calculation unit 105 is also input into the OSD menu generation unit 102. The OSD menu generation unit 102 associates the respective coordinates in an OSD menu display region instructed by the UI operation instruction unit 103 with the reduction rate of the deformation parameter 110.

The OSD menu generation unit 102 performs deformation processing of a shape of the OSD menu so that the loss of pixel information becomes smaller based on the reduction rate for the OSD menu display region. Consequently, an OSD menu 104 is generated. The deformation processing will be described in more detail below.

A video combining unit 107 receives image data 111 from the video input unit 101, receives the OSD menu 104 from the OSD menu generation unit 102, and executes combination processing of the image data 111 and the OSD menu 104.

The video combining unit 107 outputs combined image data 112, which is the result of the combination processing, to the trapezoidal distortion correction unit 108. Using the deformation parameter 110 that is generated by the distortion correction amount calculation unit 105, the trapezoidal distortion correction unit 108 performs trapezoidal distortion correction processing on the combined image data 112 input from the video combining unit 107, and outputs the resultant data to the video output unit 109.

The deformation processing performed by the OSD menu generation unit 102 will now be described in more detail.

In the deformation processing, mainly expansion processing of the OSD menu contents is performed. In the present exemplary embodiment, parts of the OSD menu are stored in the projection apparatus 100 as bitmapped images.

When the OSD menu generation unit 102 determines the OSD menu contents based on an instruction from the UI operation instruction unit 103, the OSD menu generation unit 102 assembles the stored OSD menu parts and generates an OSD menu. Further, based on the deformation parameter 110 corresponding to the instructed OSD menu display region, the OSD menu generation unit 102 performs expansion processing on the OSD menu.

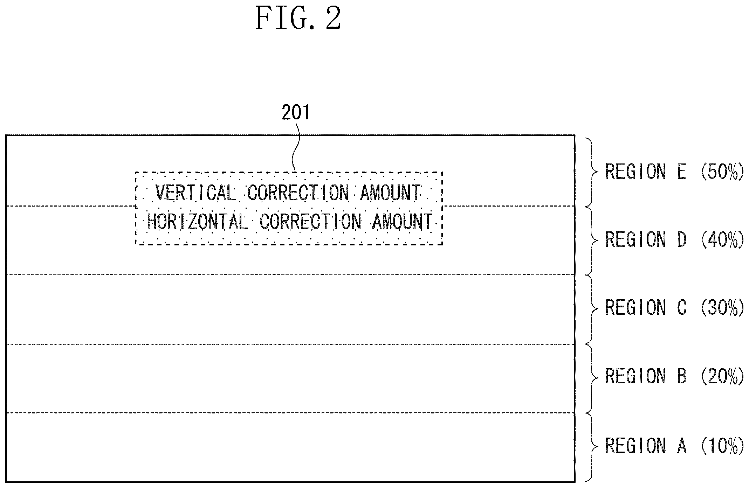

Fig. 2 illustrates an example when upward tilt projection is performed in a vertical direction, illustrating a situation in which the reduction rate during trapezoidal distortion correction is different for each region in the screen.

The reduction rate increases closer to the upper base, as indicated by a reduction rate of 10% in region A and a reduction rate of 50% in region E. An example will now be described in which, for such a case, an OSD menu for manual adjustment such as "vertical correction amount" and "horizontal correction amount" is displayed at position 201 in Fig. 2.

The "vertical correction amount" is included in region E, and a 50% reduction is performed based on the trapezoidal distortion correction. The "horizontal correction amount" is included in region D, and a 40% reduction is performed based on the trapezoidal distortion correction. Since the OSD menu display region included in the region E is the maximum reduction rate in the OSD menu, the OSD menu generation unit 102 performs a 1/(1-0.5) = 2 fold expansion, and outputs that result as the OSD menu 104.

Although the image illustrated in Fig. 2 is shown divided into five regions for ease of explanation, in actual fact the reduction rate is defined in much greater detail.

Further, in the example illustrated in Fig. 2, the OSD menu generation unit 102 generates the OSD menu by enlarging a line width relating to a display frame line of the OSD menu two-fold.

In the trapezoidal distortion correction, the deformation parameter defining the reduction rate changes based on the tilt angle between the projection apparatus 100 and the screen. If the tilt angle is 0°, i.e., the projection apparatus 100 and the screen are face to face, there is no need for the trapezoidal distortion correction, so the reduction rate is 0%.

If the tilt angle is small, the trapezoidal distortion decreases, so the trapezoidal distortion correction reduction rate decreases. In contrast, if the tilt angle is large, the trapezoidal distortion increases, so the trapezoidal distortion correction reduction rate increases. As the trapezoidal distortion correction reduction rate increases, the enlargement rate of the OSD menu increases, so that a large size OSD menu is generated.

Therefore, the size of the OSD menu with respect to the image projected on the screen increases. For example, if the trapezoidal distortion correction amount is increased based on an operation by the user, the ratio that the OSD menu takes up on the screen increases. Conversely, if the trapezoidal distortion correction amount is decreased, the ratio that the OSD menu takes up on the screen decreases.

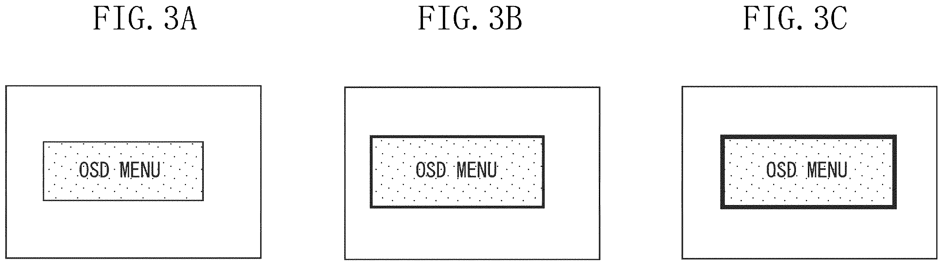

Figs. 3A, 3B, and 3C illustrate the relationship between the tilt angle and the displayed OSD menu.

Fig. 3A illustrates a case in which the projection apparatus 100 and the screen are face to face. In contrast, Fig. 3B illustrates a case in which the tilt angle of the projection apparatus 100 with respect to the screen is small, so that, compared with Fig. 3A, the size of the OSD menu is larger. Further, the characters and the line width, which are objects, are bigger and displayed wider. Fig. 3C illustrates a case in which the tilt angle of the projection apparatus 100 with respect to the screen is large, so that the size of the OSD menu is even larger. Moreover, the characters and the line width, which are objects, are even bigger and displayed wider.

In addition to deforming the size and width of the objects such as characters and line width included in the OSD menu, the shape of the objects may also be deformed.

Thus, by compensating in advance for a thinning amount during reduction of the trapezoidal distortion correction by enlarging an inverse portion of the reduction rate in the OSD menu display region, information loss of the contents that should be displayed in the OSD menu display region can be suppressed.

In the present exemplary embodiment, the expansion processing is uniformly performed based on a maximum value of the reduction rate in the OSD menu display region. However, another example of the method for realizing the OSD menu is to enlarge the OSD menu by the inverse of each reduction rate in the OSD menu display region. More specifically, in the example illustrated in Fig. 2, the OSD menu generation unit 102 performs a 1/(1-0.5) = 2 fold expansion of the OSD menu display region included in region E.

Further, the OSD menu generation unit 102 performs a 1/(1-0.4) = 1.67 fold expansion of the OSD menu display region included in region D.

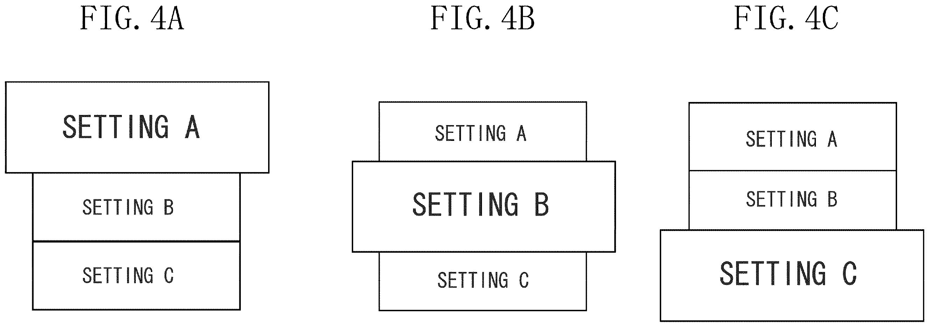

Next, a second exemplary embodiment will be described. In the second exemplary embodiment, a case in which the OSD menu illustrated in Fig. 4 is displayed will be described.

Here, as illustrated in Figs. 4A, 4B, and 4C, an OSD menu that displays a setting selected from among "setting A", "setting B", and "setting C" in an enlarged size will be described as an example. Except for the OSD menu generation unit 102 performing a different operation from that in the first exemplary embodiment, the present exemplary embodiment is realized by the same configuration as in the first exemplary embodiment.

The OSD menu generation unit 102 according to the second exemplary embodiment generates an OSD menu that displays a setting selected from among "setting A", "setting B", and "setting C" in an enlarged size. Specifically, Fig. 4A illustrates a state in which "setting A" was selected, Fig. 4B illustrates a state in which "setting B" was selected, and Fig. 4C illustrates a state in which "setting C" was selected.

Further, as in the first exemplary embodiment, a deformation parameter that defines a reduction rate is input in the OSD menu generation unit 102. The operation according to the present exemplary embodiment will be described based on an example in which the OSD menu of Fig. 4B is displayed.

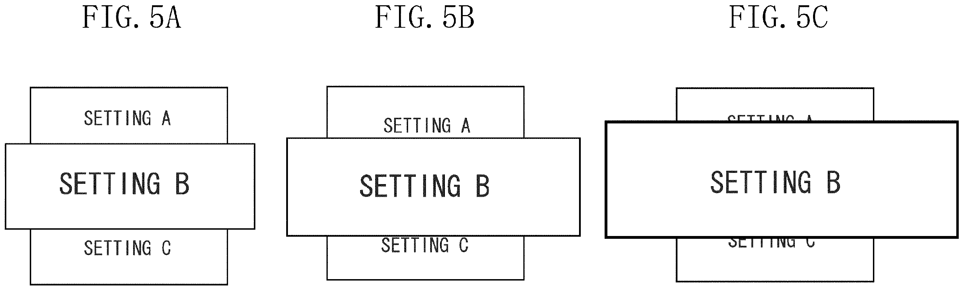

Figs. 5A, 5B, and 5C illustrate, respectively, an OSD menu generated when the reduction rate for the trapezoidal distortion correction is 0%, 20% and 40%. Specifically, Fig. 5A illustrates the OSD menu that is generated when the tilt angle is 0°, meaning that the screen and the projection apparatus 100 are face to face. Fig. 5B illustrates the OSD menu that is generated when the tilt angle is small, so the reduction rate is 20%. Fig. 5C illustrates the OSD menu that is generated when the tilt angle is large, so the reduction rate is 40%.

The OSD menu generation unit 102 determines the size of the objects of "setting B" based on the reduction rate when the objects of "setting B" indicated in the selection are generated. When the tilt angle is 0° and the screen and the projection apparatus 100 are face to face, the OSD menu generation unit 102 generates the "setting B" objects based on a predefined size.

When the projection apparatus 100 is inclined with respect to the screen, and the maximum value of the reduction rate at the position in the screen where "setting B" is displayed is 20%, the OSD menu generation unit 102 generates the "setting B" objects that have been enlarged by 1.25 fold. The "setting B" objects are configured from a character object of the words "setting B" and a frame line object. The character object of the words "setting B" is enlarged by 1.25 fold and the frame line is also enlarged by 1.25 fold.

When the tilt angle is further increased, so that the maximum value of the reduction rate at the position in the screen where "setting B" is displayed has changed to 40%, the OSD menu generation unit 102 generates the "setting B" objects that have been enlarged by 1.67 fold. At this point, the character object of the words "setting B" is enlarged by 1.67 fold and the frame line is also enlarged by 1.67 fold. In addition to changing the size of the character object of the words "setting B", the character object may also be changed to a bold font.

Then, a third exemplary embodiment will be described. The configuration of the projection apparatus according to the third exemplary embodiment is the same as the configuration of the projection apparatus 100 according to the first exemplary embodiment as illustrated in Fig. 1. However, since the processing performed by the OSD menu generation unit 102 is different from that in the first exemplary embodiment, the following description will focus on that difference.

The OSD menu generation unit 102 rasterizes the OSD menu 104 based on a vector or other such graphics command. The OSD menu generation unit 102 extracts the trapezoidal distortion correction reduction rate at the display position of the OSD menu from the deformation parameter 110 calculated by the distortion correction amount calculation unit 105. Specifically, a rasterizer included in the OSD menu generation unit 102 is operated by inputting a graphics command and the trapezoidal distortion correction reduction rate at the display position of the OSD menu.

Further, for the object described as a rendering instruction in the graphics command, the rasterizer determines the size and the thickness of the object based on the display position reduction rate, and renders the OSD menu. For example, for a character object, the rasterizer determines and renders a font size based on the deformation parameter. For a graphics object such as a frame line, the rasterizer determines and renders the line width of each pixel. The thus-generated OSD menu 104 is subjected to the same processing as in the first exemplary embodiment.

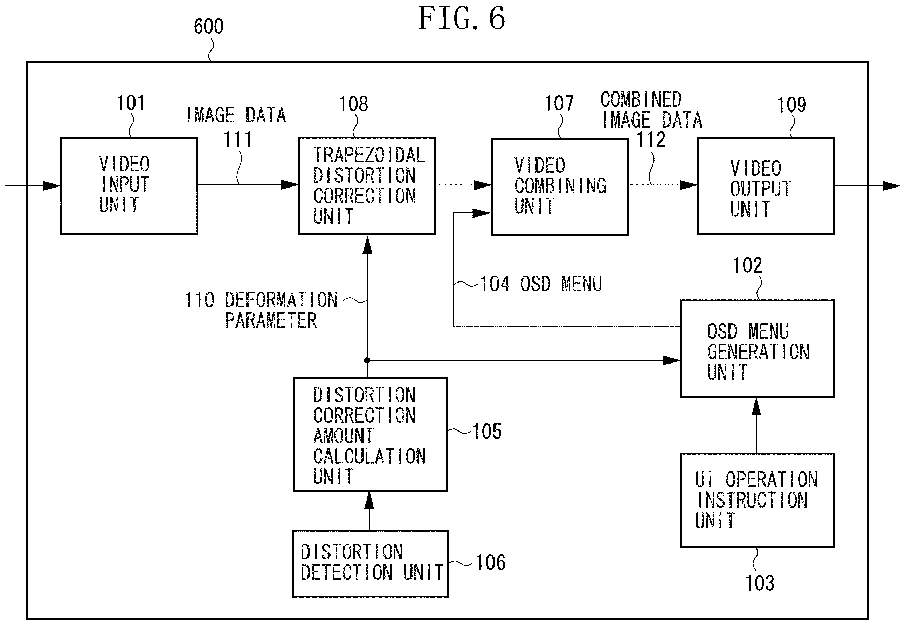

Finally, a fourth exemplary embodiment will be described. Fig. 6 illustrates a configuration of a projection apparatus 600 according to the fourth exemplary embodiment.

As illustrated in Fig. 6, in the projection apparatus 600 according to the fourth exemplary embodiment, the arrangement of the respective units of the projection apparatus 100 according to the first exemplary embodiment is changed. Specifically, in the fourth exemplary embodiment, the OSD menu generation unit 102 generates an OSD menu that has been subjected to the trapezoidal distortion correction by inputting the deformation parameter from the distortion correction amount calculation unit 105.

Further, the trapezoidal distortion correction unit 108 generates image data that has been subjected to the trapezoidal distortion correction by inputting the deformation parameter from the distortion correction amount calculation unit 105. The video combining unit 107 combines the trapezoidal distortion corrected OSD menu and the trapezoidal distortion corrected image data to output combined image data.

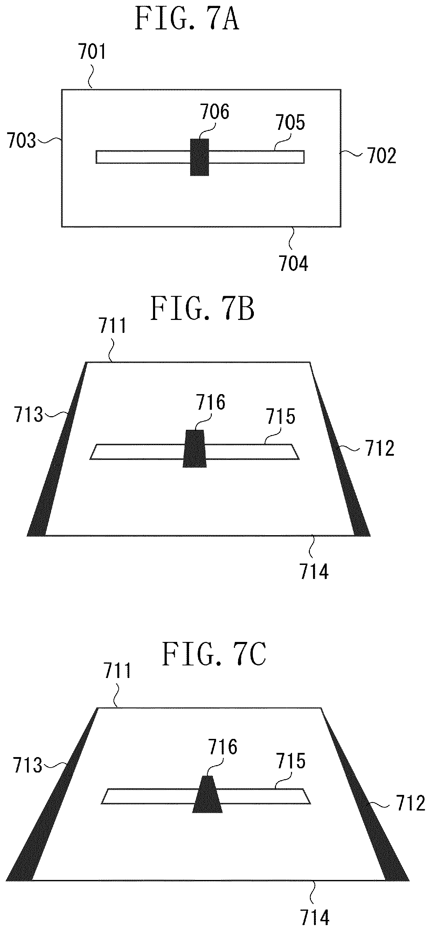

The fourth exemplary embodiment will now be described based on an example in which the OSD menu including a slider bar illustrated in Fig. 7A is generated on the screen. Further, for ease of description, as illustrated in Fig. 8, as trapezoidal distortion correction conditions, only correction in the vertical direction is performed, and in the horizontal direction the screen and the projection apparatus 600 are face to face.

The OSD menu illustrated in Fig. 7A is expressed as a combination of a plurality of object parts. A frame of the OSD menu is configured with two object parts represented by vertical lines 702 and 703 and two object parts represented by horizontal lines 701 and 704.

The slider bar is configured with an object part of a horizontal line 705 and an object part of a rectangle 706 indicating a selection point. When applying the trapezoidal distortion correction during OSD menu generation, the shape of the respective object parts is changed based on the reduction rate of each portion.

Concerning the object parts of the vertical lines 702 and 703 of the frame, since the reduction rate in the vertical direction is different, as illustrated in Fig. 7B, the vertical lines are rendered as narrow triangles 712 and 713. Further, concerning the horizontal lines 701 and 704 of the frame, since the reduction rate at the respective display positions is different, the horizontal lines are rendered as lines 711 and 714 having different thicknesses.

Further, the line 705 of the slider bar and the rectangle 706 of the selection point are respectively rendered as trapeziums 715 and 716. In addition, when the tilt angle is even larger, as illustrated in Fig. 7C, the shape and the line width of the triangles are rendered thicker.

By thus rendering the OSD menu based on the deformation parameter of the trapezoidal distortion correction based on the tilt angle, an OSD menu having improved visibility from the effects of distortion can be displayed.

Aspects of the present invention can also be realized by a computer of a system or apparatus (or devices such as a CPU or MPU) that reads out and executes a program recorded on a memory device (computer-readable medium) to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium). In such a case, the system or apparatus, and the recording medium where the program is stored, are included as being within the scope of the present invention.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A projection apparatus (100) capable of projecting an image with a user interface screen (104) superimposed thereon, the projection apparatus (100) comprising:
detection means (106) configured to detect a tilt value associated with a configuration of the projection apparatus (100) ;
calculation means (105) configured to calculate a parameter (110) for correcting the image to be projected based on the tilt value detected by the detection means (106);
determination means (102) configured to determine a size of the user interface screen (104) based on the parameter (110) such that the determined size of the user interface screen is larger than a size of the user interface screen determined when the image to be projected is not corrected; and
generation means (108) configured to generate the image to be projected by performing image correction processing on the user interface screen (104) whose size is determined by the determination means (102).

2. A projection apparatus according to claim 1, wherein the determination means (102) is further configured to determine a shape of the user interface screen (104) based on the parameter.

3. A projection apparatus according to claim 1, wherein the calculation means (105) is configured to calculate, as the parameter, a reduction rate of the image to be projected, and wherein the determination means (102) is configured to determine an enlargement rate of the user interface screen (104) based on the reduction rate calculated by the calculation means (105).

4. A projection apparatus according to claim 1 or claim 2, wherein the determination means is further configured to determine at least any one of: a size, a thickness, and a shape of an object included in the user interface screen based on the parameter.

5. A projection apparatus according to claim 3, wherein the calculation means (105) is configured to calculate, as the parameter, a reduction rate of the image to be projected, and wherein the determination means is configured to determine an enlargement rate of at least any one of: a size, a thickness, and a shape of an object included in the user interface screen based on the reduction rate calculated by the calculation means (105).

6. A projection apparatus according to claim 1 or claim 4, wherein the calculation means (105) is configured to calculate, as the parameter, a reduction rate of each region (A, B, C, D, E), of the image to be projected, and wherein the enlargement rate of the user interface screen (104) is determined based on the reduction rate of each region (A, B, C, D, E).

7. A projection apparatus according to claim 1, wherein the user interface screen is an on-screen display menu image for displaying and operating a setting of the projection apparatus.

8. A method for controlling a projection apparatus (100) capable of projecting an image with a user interface screen (104) superimposed thereon, the method comprising:
detecting a tilt value associated with a configuration of the projection apparatus (100);
calculating a parameter (110) for correcting the image to be projected based on the detected tilt value;
determining display characteristics of the user interface screen based on the parameter (110) such that the determined size of the user interface screen is larger than a size of the user interface screen determined when the image to be projected is not corrected; and
generating the image to be projected by performing image correction processing on the user interface screen (104) whose size is determined by the determination means (102).

9. A program which, when executed by a computer, causes a projection apparatus (100) to carry out the method of claim 8.

10. A program which, when loaded into a computer of a projection apparatus (100), causes the projection apparatus (100) to function as the projection apparatus (100) of any one of claims 1 to 7.

11. A storage medium storing the computer program according to claim 9 or claim 10.

## Patentansprüche

1. Projektionsvorrichtung (100), die in der Lage ist, ein Bild mit einem es überlagernden Benutzerschnittstellenschirmbild (104) zu projizieren, wobei die Projektionsvorrichtung (100) umfasst:
eine Ermittlungseinrichtung (106), die konfiguriert ist, einen Neigungsbetrag in Zusammenhang mit einer Konfiguration der Projektionsvorrichtung (100) zu ermitteln;
eine Berechnungseinrichtung (105), die konfiguriert ist, einen Parameter (110) zum Korrigieren des zu projizierenden Bildes basierend auf dem von der Ermittlungseinrichtung (106) ermittelten Neigungsbetrag zu berechnen;
eine Bestimmungseinrichtung (102), die konfiguriert ist, eine Größe des Benutzerschnittstellenschirmbilds (104) basierend auf dem Parameter (110) derart zu bestimmen, dass die bestimmte Größe des Benutzerschnittstellenschirmbilds größer ist als eine Größe des Benutzerschnittstellenschirmbilds, die bestimmt wird, wenn das zu projizierende Bild nicht korrigiert wird; und
eine Erzeugungseinrichtung (108), die konfiguriert ist, das zu projizierende Bild durch Durchführen einer Bildkorrekturverarbeitung am Benutzerschnittstellenschirmbild (104) zu erzeugen, dessen Größe durch die Bestimmungseinrichtung (102) bestimmt wird.

2. Projektionsvorrichtung nach Anspruch 1, wobei die
Bestimmungseinrichtung (102) ferner konfiguriert ist, eine Form des Benutzerschnittstellenschirmbilds (104) basierend auf dem Parameter zu bestimmen.

3. Projektionsvorrichtung nach Anspruch 1, wobei die Berechnungseinrichtung (105) konfiguriert ist, als den Parameter eine Reduktionsrate des zu projizierenden Bildes zu berechnen, und wobei die Bestimmungseinrichtung (102) konfiguriert ist, basierend auf der von der Berechnungseinrichtung (105) berechneten Reduktionsrate eine Vergrößerungsrate des Benutzerschnittstellenschirmbilds (104) zu bestimmen.

4. Projektionsvorrichtung nach Anspruch 1 oder Anspruch 2, wobei die Bestimmungseinrichtung ferner konfiguriert ist, basierend auf dem Parameter mindestens eines aus der folgenden Gruppe zu bestimmen: eine Größe, eine Dicke und eine Form eines im Benutzerschnittstellenschirmbild enthaltenen Objekts.

5. Projektionsvorrichtung nach Anspruch 3, wobei die Berechnungseinrichtung (105) konfiguriert ist, als den Parameter eine Reduktionsrate des zu projizierenden Bildes zu berechnen, und wobei die Bestimmungseinrichtung konfiguriert ist, basierend auf der von der Berechnungseinrichtung (105) berechneten Reduktionsrate eine Vergrößerungsrate von mindestens einem aus der folgenden Gruppe zu bestimmen: einer Größe, einer Dicke und einer Form eines im Benutzerschnittstellenschirmbild enthaltenen Objekts.

6. Projektionsvorrichtung nach Anspruch 1 oder Anspruch 4, wobei die Berechnungseinrichtung (105) konfiguriert ist, als den Parameter eine Reduktionsrate jedes Gebietes (A, B, C, D, E) des zu projizierenden Bildes zu berechnen, und wobei die Vergrößerungsrate des Benutzerschnittstellenschirmbilds (104) basierend auf der Reduktionsrate jedes Gebietes (A, B, C, D, E) bestimmt wird.

7. Projektionsvorrichtung nach Anspruch 1, wobei das
Benutzerschnittstellenschirmbild ein On-Screen-Display-Menübild zum Anzeigen und Bedienen einer Einstellung der Projektionsvorrichtung ist.

8. Verfahren zum Steuern einer Projektionsvorrichtung (100), die in der Lage ist, ein Bild mit einem es überlagernden Benutzerschnittstellenschirmbild (104) zu projizieren, wobei das Verfahren umfasst:
Ermitteln eines Neigungsbetrages in Zusammenhang mit einer Konfiguration der Projektionsvorrichtung (100);
Berechnen eines Parameters (110) zum Korrigieren des zu projizierenden Bildes basierend auf dem ermittelten Neigungsbetrag;
Bestimmen von Anzeigeeigenschaften des Benutzerschnittstellenschirmbilds basierend auf dem Parameter (110) derart, dass die bestimmte Größe des Benutzerschnittstellenschirmbilds größer ist als eine Größe des Benutzerschnittstellenschirmbilds, die bestimmt wird, wenn das zu projizierende Bild nicht korrigiert wird; und
Erzeugen des zu projizierenden Bildes durch Durchführen einer Bildkorrekturverarbeitung am Benutzerschnittstellenschirmbild (104), dessen Größe durch die Bestimmungseinrichtung (102) bestimmt wird.

9. Programm, welches bei Ausführung durch einen Computer einer Projektionsvorrichtung (100) diese veranlasst, das Verfahren nach Anspruch 8 auszuführen.

10. Programm, welches nach dem Laden auf einen Computer einer Projektionsvorrichtung (100) diese veranlasst, als die Projektionsvorrichtung (100) nach einem der Ansprüche 1 bis 7 zu funktionieren.

11. Speichermedium, welches das Computerprogramm nach Anspruch 9 oder Anspruch 10 speichert.

## Revendications

1. Appareil de projection (100) apte à projeter une image avec un écran d'interface d'utilisateur (104) superposé sur celle-ci, l'appareil de projection (100) comprenant :
des moyens de détection (106) configurés pour détecter une valeur d'inclinaison associée à une configuration de l'appareil de projection (100) ;
des moyens de calcul (105) configurés pour calculer un paramètre (110) pour corriger l'image devant être projetée en fonction de la valeur d'inclinaison détectée par les moyens de détection (106) ;
des moyens de détermination (102) configurés pour déterminer une taille de l'écran d'interface d'utilisateur (104) en fonction du paramètre (110), de telle sorte que la taille déterminée de l'écran d'interface d'utilisateur soit supérieure à une taille de l'écran d'interface d'utilisateur déterminée lorsque l'image devant être projetée n'est pas corrigée ; et
des moyens de génération (108) configurés pour générer l'image devant être projetée par la réalisation d'un traitement de correction d'image sur l'écran d'interface d'utilisateur (104) dont la taille est déterminée par les moyens de détermination (102).

2. Appareil de projection selon la revendication 1, dans lequel les moyens de détermination (102) sont de plus configurés pour déterminer une forme de l'écran d'interface d'utilisateur (104) en fonction du paramètre.

3. Appareil de projection selon la revendication 1, dans lequel les moyens de calcul (105) sont configurés pour calculer, comme paramètre, un taux de réduction de l'image devant être projetée, et dans lequel les moyens de détermination (102) sont configurés pour déterminer un taux d'agrandissement de l'écran d'interface d'utilisateur (104) en fonction du taux de réduction calculé par les moyens de calcul (105).

4. Appareil de projection selon la revendication 1 ou la revendication 2, dans lequel les moyens de détermination sont de plus configurés pour déterminer au moins l'une quelconque parmi : une taille, une épaisseur, et une forme d'un objet inclus dans l'écran d'interface d'utilisateur, en fonction du paramètre.

5. Appareil de projection selon la revendication 3, dans lequel les moyens de calcul (105) sont configurés pour calculer, comme paramètre, un taux de réduction de l'image devant être projetée, et dans lequel les moyens de détermination sont configurés pour déterminer un taux d'agrandissement d'au moins l'une quelconque parmi : une taille, une épaisseur, et une forme d'un objet inclus dans l'écran d'interface d'utilisateur, en fonction du taux de réduction calculé par les moyens de calcul (105).

6. Appareil de projection selon la revendication 1 ou la revendication 4, dans lequel les moyens de calcul (105) sont configurés pour calculer, comme paramètre, un taux de réduction de chaque région (A, B, C, D, E), de l'image devant être projetée, et dans lequel le taux d'agrandissement de l'écran d'interface d'utilisateur (104) est déterminé en fonction du taux de réduction de chaque région (A, B, C, D, E).

7. Appareil de projection selon la revendication 1, dans lequel l'écran d'interface d'utilisateur est une image de menu d'affichage sur l'écran pour afficher et réaliser un réglage de l'appareil de projection.

8. Procédé pour commander un appareil de projection (100) apte à projeter une image avec un écran d'interface d'utilisateur (104) superposé sur celle-ci, le procédé comprenant :
la détection d'une valeur d'inclinaison associée à une configuration de l'appareil de projection (100) ;
le calcul d'un paramètre (110) pour corriger l'image devant être projetée en fonction de la valeur d'inclinaison détectée ;
la détermination de caractéristiques d'affichage de l'écran d'interface d'utilisateur en fonction du paramètre (110) de telle sorte que la taille déterminée de l'écran d'interface d'utilisateur soit supérieure à une taille de l'écran d'interface d'utilisateur déterminée lorsque l'image devant être projetée n'est pas corrigée ; et
la génération de l'image devant être projetée par la réalisation d'un traitement de correction d'image sur l'écran d'interface d'utilisateur (104) dont la taille est déterminée par les moyens de détermination (102).

9. Programme qui, lorsqu'il est exécuté par un ordinateur d'un appareil de projection (100), amène l'appareil de projection (100) à exécuter le procédé selon la revendication 8.

10. Programme qui, lorsqu'il est chargé dans un ordinateur d'un appareil de projection (100), amène l'appareil de projection (100) à fonctionner comme l'appareil de projection (100) selon l'une quelconque des revendications 1 à 7.

11. Support de mémorisation mémorisant le programme informatique selon la revendication 9 ou la revendication 10.
